Europäisches Patentamt

European Patent Office

Office européen des brevets

(19)

(11) Numéro de publication: **0 007 854**
**B1**

(12) **FASCICULE DE BREVET EUROPEEN**

(45) Date de publication du fascicule de brevet: **25.11.81**

(51) Int. Cl.³: **B 65 G 69/04, B 01 J 4/00**

(21) Numéro de dépôt: **79400497.8**

(22) Date de dépôt: **12.07.79**

(54) Dispositif de répartition d'un solide divisé dans une enceinte.

(30) Priorité: **20.07.78 FR 7821485**

(43) Date de publication de la demande:
**06.02.80 Bulletin 80/3**

(45) Mention de la délivrance du brevet:
**25.11.81 Bulletin 81/47**

(84) Etats Contractants Désignés:
**AT BE DE GB IT NL SE**

(56) Documents cités:
**FR - A - 2 189 298**
**US - A - 2 822 097**
**US - A - 4 031 929**

(73) Titulaire: **COMPAGNIE FRANCAISE DE RAFFINAGE Société anonyme dite:**
**5, rue Michel-Ange**
**F-75781 Paris Cedex 16 (FR)**

(72) Inventeur: **Loutaty, Roben**
**29, rue Séry**
**F-76000 Le Havre (FR)**
Inventeur: **Haquet, Yvon**
**"Les Trois Pierres"**
**F-76430 Saint Romain de Colbosc (FR)**

(74) Mandataire: **Brot, Philippe et al,**
**CABINET BROT 83, rue d'Amsterdam**
**F-75008 Paris (FR)**

Courier Press, Leamington Spa, England.

# 0 007 854

Dispositif de répartition d'un solide divisé dans une enceinte

La présente invention concerne un dispositif pour répartir un solide divisé dans une enceinte; cette invention concerne plus particulièrement le stockage de grains dans des silos, ou le remplissage de réacteurs par des catalyseurs.

Par solide divisé, on entend un solide se présentant sous la forme de billes, de grains, de cylindres, de pastilles, et plus généralement de particules de forme quelconque, mais de dimensions assez faibles. Les catalyseurs servant dans les réactions de transformation de produits chimiques ou hydrocarbonés, par exemple le réformage, le craquage, la désulfuration des hydrocarbures ou de coupes pétrolières, les hydrotraitements en général, se présentent sous la forme de billes, d'extrudés, ou d'éléments multi-lobes de faibles dimensions.

Tant dans le remplissage de silos de stockage que de réacteurs catalytiques, il est intéressant d'occuper au mieux le volume destiné à contenir le solide divisé. En particulier, dans le cas des catalyseurs, il est avantageux de disposer, dans le minimum d'espace, le maximum de catalyseur, et ce de façon aussi uniforme et régulière que possible.

Les opérations de chargement classique d'un réacteur avec un catalyseur en grains sont effectuées à l'aide d'une trémie d'alimentation, qui est installée dans un trou d'homme au sommet des réacteurs et est alimentée par déversement de fûts contenant le catalyseur. Il s'ensuit qu'au point de chute du catalyseur dans le réacteur se forme une accumulation de grains, et la surface supérieure du lit catalytique n'est pas régulière et uniforme: en général, elle est en forme de dôme, plus ou moins pointu, selon la vitesse de chargement, la nature et la géométrie des grains, et la hauteur de chute des grains dans le réacteur. De plus, une telle technique ne favorise pas une densité de chargement élevée (la densité de chargement est égale au rapport: poids du solide divisé chargé/volume disponible de l'enceinte).

Un certain nombre de technique ont été mises au point pour accroître la densité de chargement, tant dans les silos que dans les réacteurs. Certaines de ces techniques combinent avec la trémie d'alimentation, et au voisinage de l'orifice inférieur de celle-ci, un élément solide tournant mû soit par un moteur, soit par le poids des particules solides tombant sur une aube solidaire de l'élément tournant en question.

De telles techniques sont par exemple décrites dans les brevets FR—A—2 189 298, US—A—3 361 258, US—A—3 430 788, US—A—3 064 833, US—A—2 687 892, US—A—1 729 341, US—A—1 590 866.

Une autre technique, décrite dans le brevet FR—A—2 288 560, consiste à installer au voisinage de l'orifice inférieur de la trémie, un élément statique, qui reçoit les grains de catalyseur provenant de la trémie. De l'air est éjecté radialement au niveau de cet élément statique, et répartit ainsi les grains de catalyseur dans le réacteur.

Ces procédés semblent donner des résultats satisfaisants, mais ils présentent toutefois les inconvénients suivants:

— d'une part, selon l'importance du trou d'homme pratiqué au sommet du silo, et surtout d'un réacteur catalytique, il peut arriver que l'élément solide tournant ou statique ne puisse être introduit dans l'enceinte à cause de sa taille;

— d'autre part, dans le cas des réacteurs catalytiques, il est important de préserver les grains de catalyseur de toute usure mécanique, puisque celle-ci provoque l'apparition des particules dites fines, qui nuisent ensuite à l'efficacité de la réaction, et constituent autant de pertes en poids de catalyseur. Or, la répartition à l'aide d'un élément solide tournant ou fixe, généralement en acier, provoque inévitablement ce type d'usure (attrition du catalyseur).

La présente invention vise à remédier à ces inconvénients.

Un but de la présente invention est donc un dispositif de répartition d'un solide divisé, qui puisse être introduit facilement dans une enceinte telle qu'un silo ou un réacteur catalytique, même si l'orifice disponible pour introduire le système de répartition a un faible diamètre.

Un autre but de la présente invention est un dispositif de répartition d'un solide divisé tel qu'un catalyseur, qui ne provoque qu'une attrition limitée de ce catalyseur.

Un autre but de l'invention est un dispositif de répartition d'un solide divisé, qui conduise à une densité élevée de chargement d'une enceinte de stockage de ce solide.

A cet effet, l'invention a pour objet un dispositif de répartition d'un solide divisé dans une enceinte, comprenant une trémie d'alimentation en solide divisé, une cheminée d'evacuation solidaire de ladite trémie, un moyen moteur entraînant en rotation un arbre disposé sensiblement suivant l'axe de la cheminée d'évacuation, et au moins un élément déflecteur porté par ledit arbre et disposé en aval de l'orifice de sortie de ladite cheminée, ce dispositif étant caractérisé en ce que ledit élément déflecteur est articulé sur ledit arbre de manière à s'en écarter angulairement, sous l'effet de la force centrifuge, lorsqu'il est entraîné en rotation.

L'élément déflecteur peut avoir toutes formes appropriées (secteurs circulaires, lanières, etc . . .) et être en un matériau rigide, semi-rigide ou souple. On peut utiliser un ou plusieurs éléments déflecteurs articulés sur l'arbre en plusieurs points d'une même section de cet arbre, et/ou en des niveaux

décalés longitudinalement. Les éléments déflecteurs articulés sur l'arbre peuvent avoir les mêmes dimensions, ou des dimensions différentes.

En particulier, lorsqu'il s'agit de lanières, les lanières installées au plus haut de l'arbre peuvent être plus courtes que les autres, la longueur desdites lanières augmentant progressivement du haut vers le bas de l'arbre. Pour un usage industriel, les lanières peuvent avoir une longueur allant de quelques centimètres à quelques mètres (en général de 10 cm à 2 ou 3 mètres).

Les études et essais effectués par la Demanderesse l'ont amenée à utiliser comme organe déflecteur préféré des lanières souples, en un matériau semi-rigide, tel que le caoutchouc armé. Ces lanières peuvent avoir une forme quelconque en coupe transversale: elles peuvent être planes, cylindriques, hélicoïdales, etc... Elles peuvent être suspendues par des crochets à l'arbre d'entraînement, ou être articulées sur celui-ci par des axes leur interdisant tout déplacement latéral au voisinage du point d'ancrage.

Les lanières ainsi entraînées en rotation sur le trajet des particules sortant de la cheminée d'évacuation dévient radialement ces particules, sans produire un effet d'attrition marqué, du fait de leur dureté modérée. Cette attrition est encore atténuée du fait que les lanières ne nécessitent, pour une bonne répartition du catalyseur dans le réacteur, qu'une faible vitesse de rotation, étant donné que la longueur des lanières peut être supérieure au diamètre d'éléments tournants ou statiques de l'art antérieur (sans pour autant que cela empêche le système d'être introduit dans le réacteur par le trou d'homme).

Le moyen moteur entraînant l'axe en rotation sera de préférence un moteur pneumatique, logé dans la trémie et/ou la cheminée d'évacuation. De préférence, afin d'éviter d'utiliser un arbre de trop grande longueur pour entraîner des éléments déflecteurs, on disposera le moteur dans la cheminée d'évacuation, immédiatement en amont de l'orifice de sortie de cette cheminée. Le moteur est rendu solidaire de ladite cheminée.

Afin de pouvoir tenir compte aisément de la géométrie du réacteur ou du silo, en particulier des parties appelées couramment les "internes", et afin de faciliter également le transport du dispositif et sa mise en place dans le réacteur, la cheminée sera avantageusement composée d'éléments télescopiques permettant d'adapter sa longueur à celle de la tubulure d'entrée du réacteur.

Dans ce cas, le moteur d'entraînement dans la cheminée est fixé de préférence à l'élément télescopique le plus bas de la cheminée d'évacuation; le moteur sera en outre relié à un câble passant sur une poulie; en remontant le moteur, celui-ci, solidaire du dernier élément télescopique, permettra d'ajuster la longueur de la cheminée, car il entraînera le dernier élément télescopique.

En vue de régulariser le débit du solide divisé, au moins une grille sera disposée sur le trajet des particules, transversalement à l'axe de la cheminée et de la trémie. Cette grille pourra être placée par exemple à l'extrémité inférieure de la cheminée mais, de préférence, on la placera à l'extrémité opposée, c'est-à-dire à la base de la trémie, et une partie au moins de cette grille sera articulée autour d'un axe horizontal, de manière à pouvoir être escamotée par pivotement, en cas d'obstruction accidentelle de la trémie. On peut également disposer sur l'orifice de la trémie, un diaphragme réglable permettant d'obturer plus ou moins le passage libre et, ainsi, de faire varier le débit de solide.

Un autre avantage du dispositif selon la présente invention consiste en ce que les éléments déflecteurs entraînés en rotation, agissent à la manière d'un ventilateur, ce qui permet accessoirement d'évacuer les fines à l'extérieur du réacteur dans lequel est installée la trémie.

Ainsi qu'on le montrera ci-après par des exemples, le dispositif conforme à l'invention permet d'obtenir un remplissage plus serré de l'enceinte. Ceci est un avantage, non seulement dans le cas où cette enceinte est un silo ou un autre volume d'emmagasinage, mais aussi dans le cas d'un réacteur catalytique, puisque, bien que la perte de charge dans le réacteur soit plus importante, du fait de la densité de chargement plus élevée, il est possible de faire varier avantageusement les conditions opératoires dans lesquelles fonctionne le réacteur: température, pression, taux gaz/charge, débit de charge à traiter, etc..., puisque le réacteur contient plus de catalyseur. Il est à noter également que les réactions envisagées sur le catalyseur peuvent être poussées plus loin: par exemple, dans le cas de l'hydrodésulfuration, on peut obtenir un taux de désulfuration plus élevé, à conditions opératoires égales.

On décrira ci-après deux formes de réalisation de l'invention représentées sous forme schématique sur les dessins annexés. On illustrera ensuite par des exemples les avantages de ce système de distribution.

La figure 1 est une coupe axiale d'une première forme de réalisation d'un dispositif conforme à l'invention;

La figure 2 est une vue analogue d'une seconde forme de réalisation;

La figure 3 est une vue de détail, illustrant un mode préféré de fixation des lanières formant l'organe déflecteur.

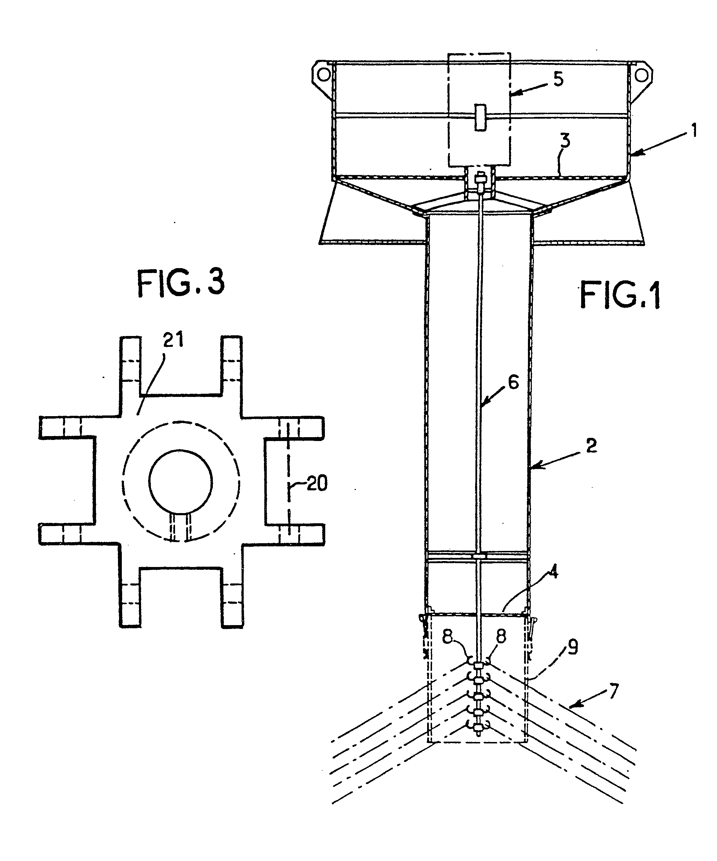

Le dispositif de distribution de la figure 1 comporte une trémie 1 d'alimentation de produits divisés, destinée à être engagée dans le trou d'homme de l'enceinte à remplir (silo, réacteur chimique ou autre). Cette trémie est équipée à sa base d'une cheminée d'évacuation 2. Une grille de retenue 3 est disposée transversalement dans la trémie et une grille de régularisation de débit 4 est disposée à la base de la cheminée 2.

Conformément à l'invention, un moteur à air comprimé 5, logé dans la trémie, entraîne, par l'intermédiaire d'un arbre 6, s'étendant suivant l'axe de la cheminée 2, des organes déflecteurs 7, constitués par des lanières en un matériau semi-rigide, suspendues à l'arbre 6 par des crochets 8, disposés régulièrement ou non à la périphérie de l'arbre 6, à différents niveaux de la longueur de celui-ci. La longueur de toutes les lanières peut être identique; elle peut également être différente; en particulier, la longueur des lanières supérieures peut être inférieure à celle des lanières situées au voisinage de l'extrémité de l'axe tournant.

Ainsi qu'il a été expliqué ci-dessus, et comme représenté sur le dessin, lorsque l'arbre 6 est entraîné en rotation par le moteur 5, les lanières 7 se soulèvent sous l'effet de la force centrifuge et font avec l'axe de la cheminée 2 un angle qui varie suivant la vitesse de rotation de l'arbre 6. Les particules de solides qui sont évacuées par la cheminée 2 viennent alors heurter les lanières 7, qui les dévient ainsi de leur trajet vertical, pour les répartir de façon plus régulière dans l'enceinte à remplir.

Les lanières seront en un matériau de faible dureté, afin de ne pas briser les particules avec lesquelles elles entrent en contact. Un matériau approprié est le caoutchouc, mais, les lanières ne devant pas être trop souples afin de ne pas risquer de s'enrouler autour de l'arbre 6, on utilisera de préférence du caoutchouc armé.

On notera la simplicité d'un tel dispositif et sa facilité d'entretien, notamment de remplacement des lanières 7. Afin de ne pas risquer d'endommager l'extrémité de l'arbre 6 portant les crochets 8, pendant les opérations de transfert du dispositif, on pourra prévoir, à la base de la cheminée, une partie amovible 9, formant écran de protection pour la base de l'arbre 6. Cette partie 9 sera naturellement démontée lors de la mise en place du dispositif sur l'enceinte à équiper.

Le dispositif représenté sur la figure 1, malgré ses avantages par rapport au dispositif de la technique antérieure, présente l'inconvénient suivant: il ne permet pas de tenir compte de la présence éventuelle des "internes" et de la longueur de la tubulure d'entrée du réacteur. En outre, du fait de sa grande longueur, l'axe 6 peut être soumis à des efforts de torsion importants.

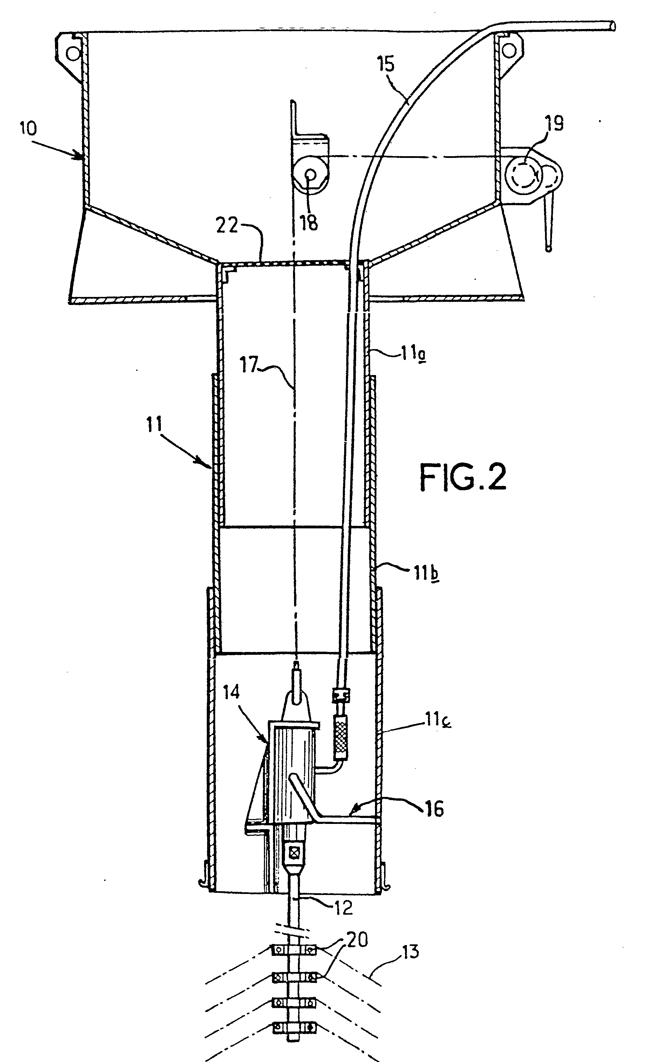

Aussi, la Demanderesse a-t-elle été amenée à mettre au point la forme de mise en oeuvre préférée de l'invention, qui est représentée sur la figure 2.

Dans cette variante, on retrouve une trémie 10, alimentant une cheminée 11, mais cette cheminée est constituée d'une pluralité d'éléments télescopiques 11a, 11b, 11c, permettant d'adapter sa longueur à la présence éventuelle des "internes" et à la longueur de la tubulure d'entrée du réacteur (géométrie de l'enceinte elle-même, et "internes").

Afin de réduire la longueur de l'arbre 12 portant les lanières 13, le moteur pneumatique 14 qui entraîne cet arbre est disposé à la base de la cheminée, au voisinage immédiat de l'orifice d'évacuation. Le moteur est alimenté en air comprimé par un conduit souple 15, plongeant dans la trémie 10 et la cheminée 11, tandis qu'un conduit d'évacuation 16 traverse latéralement l'élément de base 11c de la cheminée.

Le moteur 14 est rendu solidaire de la partie télescopique inférieure de la cheminée 11. Il est suspendu à un câble 17, passant sur des poulies de renvoi 18 et 19. Il est ainsi possible de remonter ou descendre facilement le moteur, en fonction de la longueur de la tubulure d'entrée du réacteur, et de la présence éventuelle d'"internes"; le moteur entraîne avec lui le dernier élément télescopique, ce qui permet ainsi de régler la dimension de la cheminée 11.

On notera que, dans le cas de la figure 2, les lanières ne sont plus suspendues à des crochets, comme précédemment, mais une de leurs extrémités est articulée autour d'un axe 20 dont les extrémités sont engagées dans une chape 21 (figure 3), solidaire de l'arbre 12. Ce mode de fixation des lanières présente l'avantage d'interdire à celle-ci tout jeu latéral.

Une grille 22 de régularisation de débit de matières est disposée à la base de la trémie 10. Un secteur au moins de cette grille peut être monté pivotant autour d'un axe horizontal, de manière à pouvoir être escamoté en cas d'obstruction accidentelle de la trémie.

Des essais de remplissage d'une enceinte ont été effectués avec le dispositif conforme à l'invention, dans son application au remplissage d'un réacteur catalytique avec différents types de catalyseur. Ces essais sont décrits dans les exemples qui suivent, et les résultats obtenus sont comparés à ceux procurés par d'autres modes de remplissage connus dans la technique.

Comme indiqué plus haut, les éléments déflecteurs peuvent aider à l'évacuation des fines de catalyseur par un orifice du réacteur: trou d'homme dans lequel est installée la trémie, pour un réacteur axial, ou un orifice situé à la base, pour un réacteur radial. Les fines ainsi évacuées peuvent être récupérées à l'aide d'une gaine d'aspiration branchée sur l'orifice en question.

Exemple 1

Les essais ont été effectués en laboratoire en utilisant comme modèle de réacteur un fût d'une contenance de 200 litres, de 60 cm de diamètre et de 90 cm de haut, que l'on remplit jusqu'a un niveau de 40 cm de hauteur.

Le dispositif de distribution utilisé est du type représenté sur la figure 1 des dessins, équipé de lanières souples en caoutchouc armé de 4 cm de large et de 20 cm de long, articulées par des crochets sur l'arbre d'entraînement en trois niveaux différents, séparés de 7 cm. Quatre lanières, décalées entre elles de 90°, sont accrochées au niveau le plus bas, tandis que six lanières, décalées de 60°, sont

**0 007 854**

accrochées à chacun des deux autres niveaux. Une grille de distribution, dont les caractéristiques varient suivant les essais, est fixée à la base de la trémie.

Les essais de remplissage ont été effectués avec quatre types de catalyseurs, $C_1$, $C_2$, $C_3$ et $C_4$, dont les caractéristiques sont les suivants:

|  | Forme | Diamètre mm | Longueur mm |
|---|---|---|---|
| $C_1$ | Extrudé | 1,54 | 3,0 |
| $C_2$ | Extrudé | 2,32 | 5,4 |
| $C_3$ | Billes | 1,50 | — |
| $C_4$ | Pastilles | 3,0 | 3,0 |

Les conditions des essais sont résumées dans le Tableau 1 suivant:

TABLEAU 1

| Catalyseur | Grille de distribution | | Débit (kg/h) | Vitesse de rotation des lanières (tours/min) |
|---|---|---|---|---|
|  | Diamètre (mm) | Trous | | |
| $C_1$ | 115 | 18 trous; 18 mm de diamètre | 940 | 120 |
| $C_2$ | 115 | 6 trous; 26 mm de diamètre | 783 | 120 |
| $C_3$ | 115 | 16 trous; 15 mm de diamètre | 727 | 100 |
| $C_4$ | 115 | 12 trous: 18 mm de diamètre | 1068 | 120 |

Des essais comparatifs ont été effectués sur un réacteur de laboratoire, en utilisant des méthodes connues de remplissage, à savoir:

— remplissage type "manche" (conduit souple de remplissage engagé dans le réacteur et que l'on soulève à mesure que le niveau s'élève);

— tassement par vibration (ce type de remplissage fournit habituellement les densités de remplissage les plus élevées);

— remplissage type pluie (saupoudrage).

Les densités de remplissage mesurées dans les essais ci-dessus sont rassemblées dans le Tableau 2 ci-après:

5

**0 007 854**

TABLEAU 2

| Catalyseurs | Type de remplissage | | | |
|---|---|---|---|---|
| | "Manche" | Tassement | Pluie | Dispositif selon l'invention |
| $C_1$ | 0,74 | 0,85 | 0,85 | 0,86 |
| $C_2$ | 0,55 | 0,64 | 0,63 | 0,64 |
| $C_3$ | 0,57 | 0,63 | 0,62 | 0,63 |
| $C_4$ | 0,87 | 0,99 | 0,98 | 0,98 |

Ce tableau permet de constater que l'emploi de distributeur conforme à l'invention conduit à des densités de remplissage supérieures à celles du remplissage du type "manche" et que ces densités sont voisines de celles obtenues par "pluie" et équivalentes à celles du remplissage par tassement, considéré dans la technique comme le plus efficace, mais dont l'emploi est limité à des enceintes de petites dimensions.

Exemple 2

Cet exemple concerne un essai conduit sur une unité catalytique de désulfuration avec un dispositif conforme à l'invention, muni d'une grille pour régulariser le débit de catalyseur.

Catalyseur chargé: 35,28 tonnes d'extrudés de diamètre égal à 1,5 mm puis
2,14 tonnes d'extrudés de diamètre égal à 3 mm.

Le dispositif tournant comportait sept étages de quatre lanières chacun, les lanières les plus hautes (premier étage) étant de forme trapézoïdale.

La densité de chargement obtenue est de 0,82, qui est à comparer à celle obtenue à un chargement classique "par manche" de 0,71. Le gain obtenu est donc de 16%.

Exemple 3

Cet exemple se rapporte au chargement d'un réacteur industriel de reformage. Le dispositif utilisé est conforme à la figure 3 des dessins. Il comporte en outre un diaphragme à la base de la trémie, ce qui permet de réguler le débit de catalyseur, en remplacement de la grille.

Au total, 19,3 tonnes de catalyseur (billes de 1,5 mm de diamètre) ont été chargées dans le réacteur.

La densité obtenue est de 0,68; elle se compare favorablement à celle obtenue par un chargement classique "manche", qui est de 0,6.

Le gain en densité est donc voisin de 10,5%.

Exemple 4

La Demanderesse a effectué un chargement industriel sur un réacteur radial avec le même dispositif que dans l'Exemple 3.

Les résultats comparés à ceux obtenus par un chargement par "manche", sont rassemblés dans le Tableau 3 ci-dessous.

TABLEAU 3

| | Chargement par manche | Chargement selon l'invention |
|---|---|---|
| Poids de catalyseur chargé (tonnes) | 8,1 | 9,3 |
| Volume chargé (m³) | 13,06 | 12,55 |
| Densité | 0,62 | 0,74 |
| Gain | 18,3 % | |

Ces résultats confirment que le dispositif selon l'invention permet d'augmenter très sensiblement les densités de chargement.

# O 007 854

## Revendications

1. Dispositif de répartition d'un solide divisé dans une enceinte, comprenant une trémie (1,10) d'alimentation en solide divisé, une cheminée d'évacuation (2,11) solidaire de ladite trémie, un moyen moteur (5,14) entraînant en rotation un arbre (6,12) disposé sensiblement suivant l'axe de la cheminée d'évacuation, et au moins un élément déflecteur (7,13) porté par ledit arbre et disposé en aval de l'orifice de sortie de ladite cheminée, ce dispositif étant caractérisé en ce que ledit élément déflecteur (7,13) est articulé (en 8,20) sur ledit arbre (6,12) de manière à s'en écarter angulairement, sous l'effet de la force centrifuge, lorsqu'il est entraîné en rotation.

2. Dispositif selon la revendication 1, caractérisé en ce qu'une partie au moins des organes déflecteurs (7,13) est constituée par des lanières.

3. Dispositif selon la revendication 2, caractérisé en ce qe lesdites lanières (7,13) sont en caoutchouc armé.

4. Dispositif selon l'une des revendications 1 à 3, caractérisé en ce que lesdits organes déflecteurs (7,13) ont des dimensions identiques.

5. Dispositif selon l'une des revendications 1 à 3, caractérisé en ce que lesdits organes déflecteurs (7,13) ont des dimensions différentes.

6. Dispositif selon l'une des revendications 1 à 5, caractérisé en ce que lesdits organes déflecteurs (7) sont suspendus à des crochets (8) dudit arbre (6).

7. Dispositif selon l'une des revendications 1 à 5, caractérisé en ce que lesdits éléments déflecteurs (13) sont articulés sur ledit arbre (12) par des axes (20) dont les extrémités sont portées par une chape (21).

8. Dispositif selon l'une des revendications 1 à 7, caractérisé en ce que ledit moyen moteur (5) est logé dans la trémie (1).

9. Dispositif selon l'une des revendications 1 à 7, caractérisé en ce que ledit moyen moteur (14) est logé dans la partie inférieure de ladite cheminée (11).

10. Dispositif selon l'une des revendications 8 et 9, caractérisé en ce que ledit moyen moteur (5,14) est un moteur pneumatique.

11. Dispositif selon la revendication 9, caractérisé en ce que la position dudit moyen moteur (14) est réglable par rapport à la trémie (10).

12. Dispositif selon la revendication 11, caractérisé en ce que ledit moyen moteur (14) est relié à un câble (17) à l'intérieur de la cheminée (11.

13. Dispositif selon l'une des revendications 1 à 12, caractérisé en ce que ladite cheminée (11) est constituée d'éléments télescopiques (11a, 11b, 11c).

14. Dispositif selon l'une des revendications 1 à 13, caractérisé en ce qu'une grille (4) de régulation de débit est disposée à l'extrémité inférieure de la cheminée (2).

15. Dispositif selon l'une des revendications 1 à 13, caractérisé en ce qu'une grille (22) de régulation de débit est disposée à la base de la trémie (10).

16. Dispositif selon la revendication 15, caractérisé en ce qu'une partie au moins de la grille (22) disposée à la base de la trémie (10) est escamotable.

17. Dispositif selon l'une des revendications 1 à 13, caractérisé en ce qu'une vanne à diaphragme est disposée à la base de la trémie.

18. Application d'un dispositif conforme à l'une des revendications 1 à 17 au chargement en catalyseur d'un réacteur caractérisé en ce qu'une gaine d'aspiration de fines de catalyseur est branchée sur un orifice dudit réacteur.

## Patentansprüche

1. Vorrichtung zur Verteilung eines teilchenförmigen Feststoffs in einem Behälter, welche einen Trichter (1, 10) zur Zufuhr des teilchenförmigen Feststoffs, einen mit dem Trichter verbundenen Abzugskanal (2, 11), einen Drehantrieb (5, 14) für eine im wesentlichen entlang der Achse des Abzugskanals angeordnete Welle (6, 12) und wenigstens ein Ablenkelement (7, 13) aufweist, welches von der Welle gehalten und stromabwärts von der Austrittsöffnung des Kanals angeordnet ist, dadurch gekennzeichnet, daß das Ablenkelement (7, 13) bei (8, 20) an der Welle (6, 12) derart engelenkt ist, daß es unter der Wirkung der Zentrifugalkraft von der Welle wegschwenkt, wenn sie in Umdrehung versetzt wird.

2. Vorrichtung nach Anspruch 1, dadurch gekennzeichnet, daß wenigstens ein Teil der Ablenkorgane (7, 13) aus Streifen besteht.

3. Vorrichtung nach Anspruch 2, dadurch gekennzeichnet, daß die Streifen (7, 13) aus armiertem Kautschuk bestehen.

4. Vorrichtung nach einem der Ansprüche 1 bis 3, dadurch gekennzeichnet, daß die Ablenkorgane (7, 13) identische Abmessungen aufweisen.

5. Vorrichtung nach einem der Ansprüche 1 bis 3, dadurch gekennzeichnet, daß die Ablenkorgane (7, 13) unterschiedliche Abmessungen aufweisen.

6. Vorrichtung nach einem der Ansprüche 1 bis 5, dadurch gekennzeichnet, daß die Ablenk-

7

organe (7) an Haken (8) der Welle (6) aufgehängt sind.

7. Vorrichtung nach einem der Ansprüche 1 bis 5, dadurch gekennzeichnet, daß die Ablenkelemente (13) an der Welle (12) durch Achsen (20) angelenkt sind, deren Enden von einer Gelenkgabel (21) gehalten sind.

8. Vorrichtung nach einem der Ansprüche 1 bis 7, dadurch gekennzeichnet, daß der Antrieb (5) in dem Trichter (1) angeordnet ist.

9. Vorrichtung nach einem der Ansprüche 1 bis 7, dadurch gekennzeichnet, daß der Antrieb (14) im unteren Abschnitt des Kanals (11) angeordnet ist.

10. Vorrichtung nach Anspruch 8 oder 9, dadurch gekennzeichnet, daß der Antrieb (5, 14) ein pneumatischer Motor ist.

11. Vorrichtung nach Anspruch 9, dadurch gekennzeichnet, daß die Position des Antriebs (14) bezüglich des Trichters (10) einstellbar ist.

12. Vorrichtung nach Anspruch 1, dadurch gekennzeichnet, daß der Antrieb (14) mit einem Kabel (17) im Innern des Kanals (11) verbunden ist.

13. Vorrichtung nach einem der Ansprüche 1 bis 12, dadurch gekennzeichnet, daß der Kanal (11) aus teleskopierbaren Elementen (11a, 11b, 11c) besteht.

14. Vorrichtung nach einem der Ansprüche 1 bis 13, dadurch gekennzeichnet, daß ein Gitter (4) zur Einstellung des Durchsatzes am unteren Ende des Kanals (2) angeordnet ist.

15. Vorrichtung nach einem der Ansprüche 1 bis 13, dadurch gekennzeichnet, daß ein Gitter (22) zur Einstellung des Durchsatzes an der Basis des Trichters (10) angeordnet ist.

16. Vorrichtung nach Anspruch 15, dadurch gekennzeichnet, daß wenigstens ein Teil des an der Basis des Trichters (10) angeordneten Gitters (22) zurückklappbar ist.

17. Vorrichtung nach einem der Ansprüche 1 bis 13, dadurch gekennzeichnet, daß an der Basis des Trichters ein Membranventil engeordnet ist.

18. Verwendung der Vorrichtung nach einem der Ansprüche 1 bis 17 zur Beschickung eines Reaktors mit Katalysator, dadurch gekennzeichnet, daß ein Schlauch zum Absaugen von Katalysatorstaub an eine Öffnung des Reaktors angeschlossen ist.

**Claims**

1. A device for distributing a divided solid in an enclosure, comprising a hopper (1,10) for feeding the divided solid, a discharge chimney (2,11) integral with said hopper, a drive means (5,14) rotating a shaft (6,12) disposed substantially along the axis of the discharge chimney, and at least one deflector element (7,13) carried by said shaft and disposed downstream of the outlet aperture of said chimney, this device being characterized in that said deflector element (7,13) is hinged (at 8,20) to said shaft (6,12) so as to move angularly away therefrom, under the effect of the centrifugal force, when it is rotated.

2. A device according to claim 1, characterized in that a part at least of the deflector members (7,13) is formed by thin straps.

3. A device according to claim 2, characterized in that said thin straps (7,13) are made from reinforced rubber.

4. A device according to one of claims 1 to 3, characterized in that said deflector members (7,13) have identical dimensions.

5. A device according to one of claims 1 to 3, characterized in that said deflector members (7, 13) have different dimensions.

6. A device according to one of claims 1 to 5, characterized in that said deflector members (7) are suspended from hooks (8) on said shaft (6).

7. A device according to one of claims 1 to 5, characterized in that said deflector elements (13) are hinged to said shaft (12) by pins (20) whose ends are carried by a cover (21).

8. A device according to one of claims 1 to 7, characterized in that said drive means (5) is housed in the hopper (1).

9. A device according to one of claims 1 to 7, characterized in that said drive means (14) is housed in the lower part of said chimney (11).

10. A device according to one of claims 8 and 9, characterized in that said drive means (5,14) is a pneumatic motor.

11. A device according to claim 9, characterized in that the position of said drive means (14) is adjustable with respect to the hopper (10).

12. A device according to claim 11, characterized in that said drive means (14) is connected to a cable (17) inside the chimney (11).

13. A device according to one of claims 1 to 12, characterized in that said chimney (11) is formed from telescopic elements (11a, 11b, 11c).

14. A device according to one of claims 1 to 13, characterized in that a flow regulation grid (4) is disposed at the lower end of the chimney (2).

15. A device according to one of claims 1 to 13, characterized in that a flow regulation grid (22) is disposed at the base of the hopper (10).

**0 007 854**

16. A device according to claim 15, characterized in that a part at least of the grid (22) disposed at the base of the hopper (10) is retractable.

17. A device according to one of claims 1 to 13, characterized in that a diaphragm valve is disposed at the base of the hopper.

18. Application of a device according to one of claims 1 to 17 to charging a reactor with catalyst, characterized in that a sheath for sucking in catalyst fines is connected to an aperture of said reactor.

9

# FIG.3

# FIG.1

0 007 854

FIG.2